## Europäisches Patentamt

## European Patent Office

## Office européen des brevets

(19)

(11) Veröffentlichungsnummer: **0 113 389**
A1

(12) **EUROPÄISCHE PATENTANMELDUNG**

(21) Anmeldenummer: 83105593.4

(22) Anmeldetag: 07.06.83

(51) Int. Cl.³: **B 23 Q 11/00**

(30) Priorität: 10.12.82 CH 7196/82

(43) Veröffentlichungstag der Anmeldung:
18.07.84 Patentblatt 84/29

(84) Benannte Vertragsstaaten:
AT CH DE FR GB IT LI NL SE

(71) Anmelder: MDC Max Dätwyler Bleienbach AG
Flugplatz
CH-3368 Bleienbach(CH)

(72) Erfinder: Dätwyler, Max
Thunstettenstrasse 13
CH-4900 Langenthal(CH)

(74) Vertreter: Patentanwälte Schaad, Balass, Sandmeier, Alder
Dufourstrasse 101 Postfach
CH-8034 Zürich(CH)

(54) Vorrichtung zum Entlasten der Führung für zumindest in im wesentlichen vertikaler Richtung bewegbare Bauteile, insbesondere von Bearbeitungsmaschinen, wie beispielsweise Werkzeugmaschinen.

(57) Der Spindelkasten (13) einer Werkzeugmaschine (1) ist an einer Aufhängeeinrichtung (17) aufgehängt. Diese Aufhängeeinrichtung (17) stützt sich über eine Rolle (25) auf einem balkenförmigen Abstützelement (26) ab. Letzteres liegt auf zwei Auflagern (27, 28) auf, von denen jedes auf einem eigenen Fundament (29, 30) ruht. Die letzteren sind vom Fundament (6) der Werkzeugmaschine (1) getrennt. Die von der Aufhängeeinrichtung (17) übernommene Belastung wird somit getrennt vom Ständer (10) und dem Maschinenbett (2a,2b) in den Untergrund (7) eingeleitet. Dadurch werden die Führungen (11, 15) für den Spindelkasten (13) und den Ständer (10) entlastet, wodurch eine genaue Geradführung ermöglicht wird.

./...

EP 0 113 389 A1

Fig. 2

Vorrichtung zum Entlasten der Führung für zumindest in im wesentlichen vertikaler Richtung bewegbare Bauteile, insbesondere von Bearbeitungsmaschinen, wie beispielsweise Werkzeugmaschinen.

---

Die vorliegende Erfindung betrifft eine Vorrichtung zum Entlasten der Führung für zumindest in im wesentlichen vertikaler Richtung bewegbare Bauteile, insbesondere für Maschinen- und Apparateteile, vorzugsweise Schlitten oder Werkzeug- oder Werkstückhalteeinrichtungen von Bearbeitungsmaschinen, wie beispielsweise Werkzeugmaschinen, gemäss Oberbegriff des Anspruches 1.

Es ist bei Werkzeugmaschinen bekannt, den das Werkzeug oder die Werkzeuge haltenden und in vertikaler Richtung verschiebbaren Spindelkasten mittels einer am Ständer abgestützten Vertikalführung zu führen. Es ist ferner bekannt, den Ständer in horizontaler Richtung verfahrbar auszubilden und ihn auf am Maschinenbett angebrachten Horizontalführungen abzustützen.

Bei allen diesen bekannten Lösungen werden die erwähnten Horizontal- und Vertikalführungen unter anderem durch das Gewicht des geführten Maschinenteiles und/oder durch Momente belastet, die durch diese Maschinenteile bewirkt werden. Um diese Belastungen aufnehmen zu können, müssen das Maschinenbett bzw. der Ständer entsprechend steif ausgebildet werden, was zu verhältnismässig massiver und

26.5.1983                                          A 4541
Al:vm

schwerer Bauweise zwingt. Trotzdem kann eine gewisse Deformation der Führungen nicht verhindert werden, was eine sehr genaue Positionierung der genannten Maschinenteile verunmöglicht.

Aus der GB-OS 2 033 796 ist es nun bekannt, für den sowohl in vertikaler wie auch horizontaler Richtung verschiebbaren Spindelkasten eine Gewichtsausgleichsvorrichtung vorzusehen, die an einem Rahmen befestigt ist, der vom Ständer mit der Vertikalführung für den Spindelkasten getrennt ist. Dieser Rahmen und auch der Ständer sind auf einer Grundplatte befestigt, die auf einer am Maschinenbett vorgesehenen Horizontalführung abgestützt ist.

Wohl ist bei dieser Lösung die Vertikalführung der durch das Gewicht des Spindelkastens bedingten Belastung nicht ausgesetzt, doch hat demgegenüber die Horizontalführung das Gewicht von Spindelkasten, Gewichtsausgleichsvorrichtung und Rahmen zu tragen. Um diese Belastung aufnehmen zu können, ist es, wie bereits erwähnt, notwendig, das Maschinenbett massiv und dementsprechend schwer auszubilden. Doch auch mit einer solchen Bauweise lässt sich eine Deformation der Führungen nicht vollständig vermeiden.

Es ist nun Aufgabe der vorliegenden Erfindung, unter Vermeidung der vorstehend erwähnten Nachteile eine Vorrichtung der eingangs genannten Art zu schaffen, die bei möglichst einfachem Aufbau ein wirksames Entlasten aller Führungen für den Bauteil, d.h. neben dessen Vertikalführung z.B. auch einer allenfalls vorhandenen Horizontalführung, erlaubt.

Diese Aufgabe wird erfindungsgemäss durch die Merkmale des kennzeichnenden Teils des Anspruches 1 gelöst.

Da die Aufhängeeinrichtung von der Abstützung für die Vertikalführung und einer allfälligen Horizontalführung getrennt ist und die übernommene Belastung getrennt von der Abstützung für die Führung für den Bauteil ableitet, wird diese Führung entlastet. Die auf diese Weise von der Aufgabe einer Lastübernahme weitgehend befreite Führung ist nun ohne weiteres in der Lage, ihre Hauptfunktion, nämlich die Gewährleistung einer sehr genauen Führung des Bauteils, einwandfrei auszuüben.

Da mit der Führung auch deren Abstützung entlastet wird, kann letztere entsprechend leichter ausgebildet werden, wobei die entlasteten Führungen weniger der Abnützung unterworfen sind, was die Lebensdauer der Maschine bezüglich deren Genauigkeit erhöht. Die erfindungsgemässe Lösung ermöglicht es auch, die Abstützung für die Führung, z.B. das Maschinenbett oder den Ständer einer Bearbeitungsmaschine, auf einem Fundament oder einem andersartigen Tragwerk anzuordnen, das getrennt vom Tragwerk bzw. vom Fundament für die Aufhängeeinrichtung ist.

Bevorzugte Weiterausbildungen des Erfindungsgegenstandes sind in den Ansprüchen 2 - 9 definiert.

Im Folgenden wird der Erfindungsgegenstand anhand der Zeichnung näher erläutert. Es zeigt rein schematisch:

Fig. 1        in perspektivischer Darstellung eine Werkzeugmaschine,

Fig. 2        die Werkzeugmaschine gemäss Fig. 1 in
              Seitenansicht und teilweise im Schnitt, und

Fig. 3        in einer der Fig. 1 entsprechenden Darstellung eine Variante der Werkzeugmaschine
              gemäss den Fig. 1 und 2.

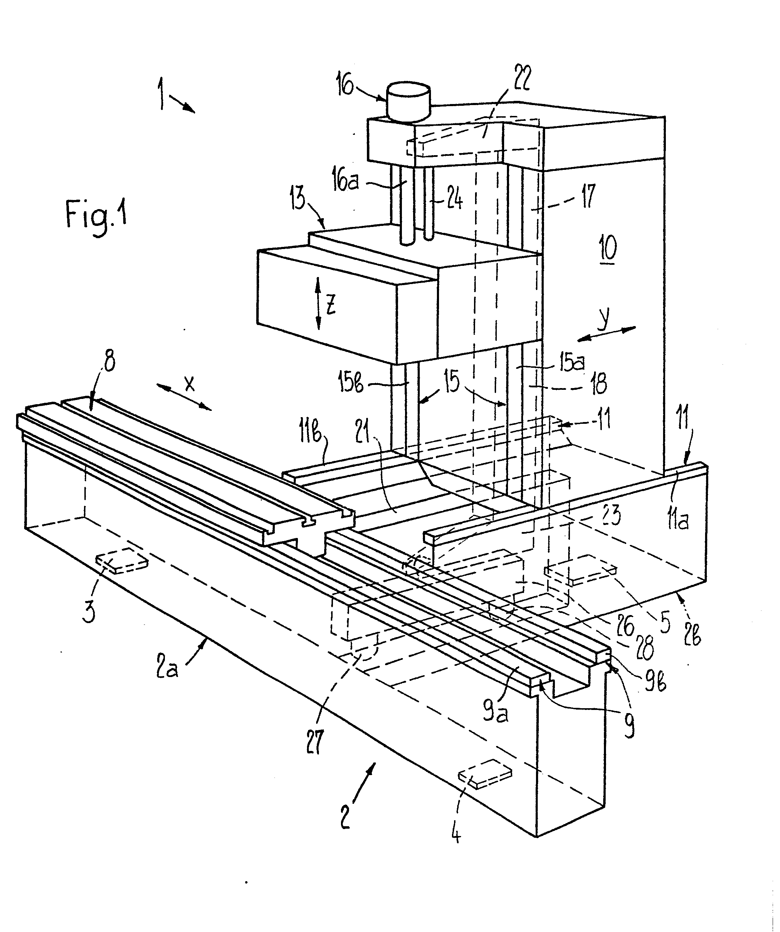

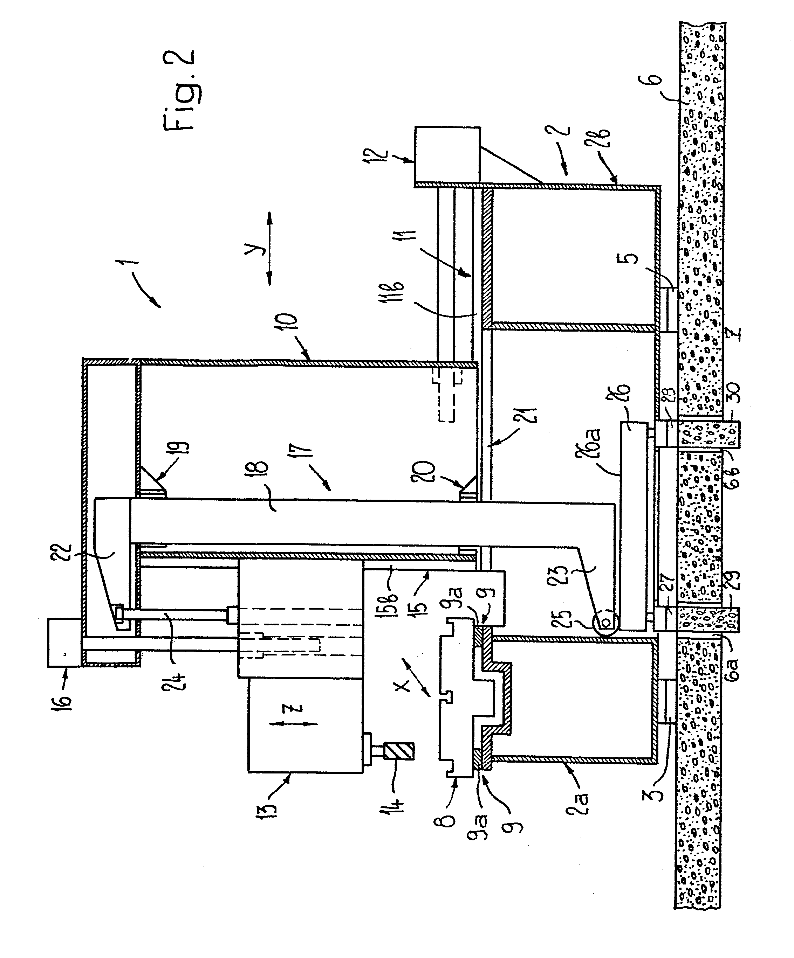

Die in den Figuren 1 und 2 gezeigte Werkzeugmaschine 1
weist ein T-förmiges Maschinenbett 2 auf, dessen zueinander rechtwinklig stehende Arme mit 2a und 2b bezeichnet
sind. Das Maschinenbett 2 ruht auf drei Abstützungen 3,
4 und 5, die auf dem Maschinenfundament 6 aufliegen. Mit 7
ist das sich unterhalb des Fundamentes 6 befindliche Tragwerk, im vorliegenden Fall der Baugrund, bezeichnet.

Auf dem Arm 2a des Maschinenbettes 2 ist ein Tisch oder
Schlitten 8 zur Aufnahme des zu bearbeitenden Werkstückes
angeordnet, der durch einen nicht dargestellten Antrieb
in Richtung der X-Achse hin- und herverschiebbar ist. Zur
Geradführung des Tisches 8 ist eine Führung 9 vorgesehen,
die durch zwei Führungsbahnen 9a und 9b gebildet wird,
welche sich auf dem Maschinenbettarm 2a abstützen. Die
Werkzeugmaschine 1 weist ferner einen Ständer 10 auf, der
in Richtung der Y-Achse verfahrbar ist. Die Geradführung
des Ständers 10 übernimmt eine Führung 11, die ebenfalls
durch zwei Führungsbahnen 11a und 11b gebildet wird, welche sich auf dem andern Maschinenbettarm 2b abstützen. Der
Antrieb zum Bewegen des Ständers 10 in der Y-Achse ist nur rein schematisch dargestellt und mit 12 bezeichnet (Fig. 2). Die Werkzeugmaschine 1 weist ferner einen Spindelkasten 13 auf, in welchem das Bearbeitungswerkzeug 14, z.B. ein Fräs-, Schleif- oder Bohrwerkzeug, gehalten ist. In diesem Spindelkasten 13 ist auf an sich bekannte Weise der Antrieb für das Werkzeug 14 untergebracht. Der Spindelkasten 13 ist in vertikaler Richtung, d.h. in Richtung der Z-Achse, verschiebbar. Am Ständer 10 ist eine Vertikalführung 15 zur Führung des Spindelkastens 13 während seiner Bewegung vorgesehen. Diese Führung 15 besteht aus zwei am Ständer 10 angebrachten Führungsbahnen 15a und 15b. Der Ständer 10 trägt weiter einen Antrieb 16 zum Heben und Senken des Spindelkastens 13.

Soweit entspricht die in den Fig. 1 und 2 dargestellte Werkzeugmaschine 1 weitgehend herkömmlichen Werkzeugmaschinen. Im Folgenden wird nun näher auf die Besonderheiten dieser Werkzeugmaschine 1 eingegangen.

Zu einer Entlastung der Führungen 11 und 15 dient eine Aufhängevorrichtung 17, deren Aufbau sich insbesondere aus der Fig. 2 erkennen lässt. Die in der Art eines Galgens ausgebildete Aufhängeeinrichtung 17 weist einen vertikal verlaufenden Träger 18 auf, der an zwei mit 19 und 20 bezeichneten Führungsstellen im Ständer 10 gehalten ist und sich in eine Ausnehmung 21 im Maschinenbettarm 2b hinein erstreckt. An seinen Enden ist der Träger 18 mit abstehenden Armen 22 und 23 verbunden. Am obern Arm 22 ist ein Aufhängeelement 24 befestigt, das an seinem untern Ende mit dem Spindelkasten 13 verbunden ist. Das Aufhängeelement 24 ist auf nicht näher dargestellte Weise in seiner Länge veränderbar, um der Auf- und Abbewegung des Spindelkastens 13 folgen zu können, der am Aufhängeelement 24 aufgehängt ist. Es ist auch denkbar, ein Aufhängeelement 24 mit fester Länge zu verwenden und dafür den Träger 18 längenveränderbar auszubilden, z.B. teleskopartig ausziehbar.

Am Ende des untern Armes 23 ist in der Flucht mit dem Aufhängeelement 24 eine Abstützrolle 25 angebracht, die sich auf ein balkenförmiges Abstützelement 26 abstützt, das sich in Verschieberichtung Y des Ständers 10 erstreckt und auf seiner Oberseite eine Lauffläche 26a für die Rolle 25 aufweist. Das Abstützelement 26 liegt auf zwei Auflagern 27 und 28 auf, von denen jede auf einem Fundament 29 bzw. 30 ruht, das sich durch eine Oeffnung 6a bzw. 6b im Maschinenfundament 6 hindurcherstreckt und somit von letzterem getrennt ist. Bei einer Bewegung des Ständers 10 in Y-Richtung wird die Aufhängeeinrichtung 17 mitgenommen, wobei sie über das Abstützelement 26 rollt.

Da die Vertikalkomponente der durch das Gewicht des Spindelkastens 13 bedingten Belastung von der Aufhängeeinrichtung 17 übernommen wird und die damit verbundenen Kräfte über die Fundamente 29 und 30 direkt in den Baugrund 7 eingeleitet werden, werden die Führungen 11 und 15 entsprechend entlastet. Dasselbe trifft auch auf den Ständer 10 zu. Diese Entlastung der Führungen 11 und 15 hat nun zur Folge, dass letztere keine (eine sehr genaue Führung des Ständers 10 bzw.des Spindelkastens 13 verhindernde) Deformation mehr erfahren. Im weitern ist es möglich, sowohl den Ständer 10 wie auch den Maschinenbettarm 2b leichter auszuführen.

Da das Gewicht des Spindelkastens 13 nicht mehr vom Maschinenbettarm 2b übernommen werden muss, kann letzterer leichter ausgebildet werden.

Falls die Aufhängung des Spindelkastens 13 nicht in seinem Schwerpunkt erfolgt, kann auf dessen Führung 15 und auf den Ständer 10 ein entsprechendes Moment wirken. Im weitern wirken auf die Führung 15 und den Ständer 10 auch noch beim Bearbeitungsvorgang auftretende Kräfte und Momente, z:B. die Schnittkräfte, ein. Um nun die Führung 15 des Spindelkastens 13 auch noch von dieser quer zur Führung 15 wirkenden Belastung zu entlasten, kann eine zusätzliche, von der Führung 15 getrennte Abstützeinrichtung für den Spindelkasten 13 vorgesehen werden, die sich ihrerseits an einer vom Ständer 10 getrennten Abstützung, z.B. an der Aufhängeeinrichtung 17 oder an einer andern geeigneten Abstützung, abstützt. Letztere wäre dann vorteilhafterweise ebenfalls so auszubilden, dass die von dieser zusätzlichen Abstützeinrichtung übernommenen Kräfte und Momente ebenfalls getrennt vom Ständer 10 bzw. dem Maschinenbett 2 in das Maschinenfundament 6 oder den Untergrund 7 eingeleitet werden.

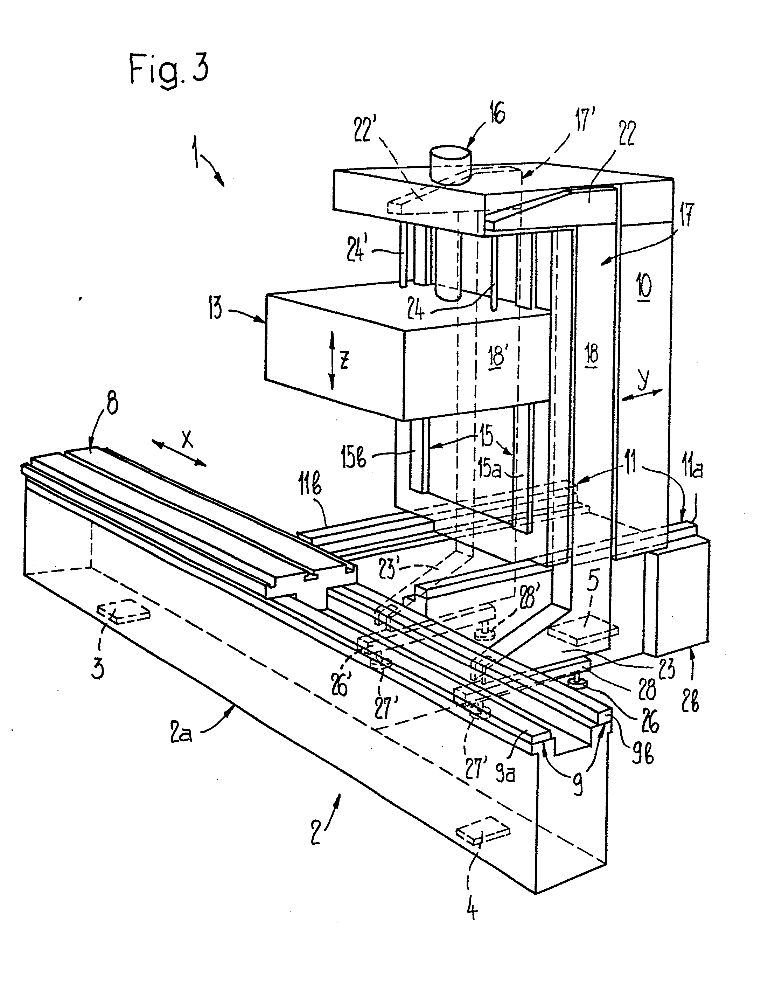

Die in Fig. 3 gezeigte Variante der Werkzeugmaschine 1 unterscheidet sich von der in den Fig. 1 und 2 gezeigten Ausführungsform nur dadurch, dass der Spindelkasten 13 nicht nur an einer Stelle, sondern an zwei in einem Abstand voneinander angeordneten Stellen aufgehängt ist. Zu diesem Zweck sind zwei identische Aufhängeeinrichtungen 17 und 17' vorhanden, von denen jede der Aufhängeeinrichtungen 17 gemäss den Fig. 1 und 2 entspricht. Wie aus

Fig. 3 hervorgeht, sind die beiden Aufhängeeinrichtungen 17, 17' nicht im Innern des Maschinenbettarmes 2b und des Ständers 10, sondern seitlich davon angeordnet. Gleich wie beim Ausführungsbeispiel gemäss den Fig. 1 und 2 erfolgt die Abstützung der beiden Aufhängeeinrichtungen an Stellen, die von den Abstützungen 3, 4, 5 für das Maschinenbett 2 getrennt sind.

Im Folgenden wird noch auf weitere mögliche Ausführungsformen eingegangen.

Es ist auch möglich, die Auflager 27 und 28 nicht wie gezeigt auf eigenen Fundamenten 29 und 30 abzustützen, sondern ebenfalls auf dem Maschinenfundament 6. Auch in einem solchen Fall sind jedoch die Abstützstellen der Aufhängeeinrichtung 17, 17' von den Abstützstellen 3, 4, 5 des Maschinenbettes 2 getrennt.

Die Auflager 27 und 28 können auch gleichachsig mit den Abstützungen 3,4,5 des Maschinenbettes 2 angeordnet werden, wobei die Abstützungen 3,4,5 die Auflager 27,28 umgeben und von diesen getrennt sind. Auch in diesem Fall erfolgt die Abstützung des Maschinenbettes 2 gesondert von der Abstützung der Aufhängeeinrichtung 17, 17'.

Dadurch, dass wenigstens ein Teil des Gewichtes des Spindelkastens 13 nicht mehr über die Führungen 11 und 15 in das Maschinenbett 2 bzw. den Ständer 10 eingeleitet wird sondern von der Aufhängeeinrichtung 17, 17' übernommen wird, wird, wie bereits erwähnt, erreicht, dass eine unerwünschte Deformation der Führungen 11 und 15 vermieden wird, so dass eine sehr genaue Führung erreicht werden kann. Zudem kann das Maschinenbett 2 und auch der Ständer 10 leichter ausgebildet werden. Beim Vorsehen von separaten Fundamenten 29, 30 für die Aufhängeeinrichtung 17, 17' ermöglicht dies eine weniger massive Ausgestaltung des Maschinenfundamentes 6. Die leichtere Bauweise von Maschinenbett 2 und Ständer 10 erleichtert zudem beim Aufstellen der Werkzeugmaschine 1 das Ausnivellieren, um so mehr als die Abstützstellen 3,4,5 des Maschinenbettes 2 von den Abstützstellen 27, 28 der Aufhängeeinrichtung 17, 17' gesondert sind.

Da die genaue Führung des Spindelkastens 13,wie bereits erwähnt, durch die Führungen 11 und 15 sichergestellt ist, ist es nicht erforderlich, dass die Führung der Aufhängeeinrichtung 17, 17' sehr genau ist. Es ist daher möglich, für diese Führungen z.B. Rollen 25 und dgl. zu verwenden.

Es ist unter Umständen auch möglich, die Aufhängeeinrichtung 17, 17' nicht wie gezeigt direkt am Maschinenfundament 6 oder auf eigenen Fundamenten 29, 30 abzustützen, sondern auf geeignete Weise im Maschinenbett 2. Auch im letztgenannten Fall werden die Führungen 11 und 15 von der Uebernahme des Gewichtes des Spindelkastens 13 oder anderer Beanspruchungen mindestens zum Teil entlastet.

Im Folgenden werden nun weitere Varianten erläutert.

Es versteht sich, dass die Führungen 11, 15 auch einen von einer Geraden abweichenden Verlauf haben können. Ebenso kann jede dieser Führungen 11, 15 aus nur einer Führungsbahn oder mehr als zwei Führungsbahnen gebildet werden.

Es ist weiter denkbar, bei der Ausführungsform gemäss den Fig. 1 und 2 die Antriebseinheit 16 für den Spindelkasten 13 am Arm 22 der Aufhängeeinrichtung 17 anzuordnen und den Spindelkasten 13 an dieser Antriebseinheit 16, z.B. an deren Antriebsspindel 16a, aufzuhängen. In diesem Fall kann auf das Aufhängeelement 24 verzichtet werden.

Statt den Spindelkasten 13, wie gezeigt, über die Aufhängeeinrichtung 17, 17' auf den Fundamenten 29, 30 oder auf dem Maschinenfundament 6 abzustützen, ist es auch möglich, den Spindelkasten 13 aufzuhängen, z.B. an einem oberhalb der Werkzeugmaschine 1 angeordneten Tragwerk.

Die Aufhängeeinrichtung 17, 17' muss nicht, wie gezeigt, im oder auf dem Baugrund 7 abgestützt werden, sondern lässt sich auch auf einem geeigneten Tragwerk abstützen.

In der Regel werden die Führungen 11, 15 nicht vollständig entlastet, damit sie ihre Führungsaufgabe noch erfüllen können. Es ist nun möglich, die Entlastung der Führungen so zu steuern, dass letztere immer derselben, wenn auch verhältnismässig geringen, Belastung ausgesetzt sind.

Die erfindungsgemässe Idee der Entlastung der Führungen für einen beweglichen Maschinenteil lässt sich selbstverständlich auch bei Werkzeugmaschinen anwenden, die anders aufgebaut sind als die in den Figuren gezeigte Werkzeugmaschine 1, z.B. auch bei solchen Maschinen, bei denen der Ständer in der Y-Achse nicht verfahrbar ist.

Als Beispiele von Werkzeug- und anderen Bearbeitungsmaschinen, bei denen die beschriebene Entlastung der Führungen vorzugsweise angewendet werden kann, seien genannt: Bohr-, Dreh-, Fräs-, Hobel-, Schleif-, Stanz- und Nibbelmaschinen, Erodiermaschinen, Energiestrahl- (Elektronenstrahl-, Laserstrahl-, Plasmastrahl-) maschinen, Schweiss- und Brennschneidemaschinen. Das beschriebene Prinzip der Führungsentlastung könnte jedoch auch bei andersartigen Maschinen und Apparaten, z.B. bei Spritzeinrichtungen, Industrierobotern sowie Apparaten und Geräten für Röntgenaufnahmen, für tomographische Untersuchungen, zum Bestrahlen und dgl., Anwendung finden, bei denen eine genaue Führung einer beweglichen Baueinheit, die eine Belastung der Führung bewirkt, erforderlich ist.

PATENTANSPRUECHE

1. Vorrichtung zum Entlasten der Führung für zumindest in im wesentlichen vertikaler Richtung bewegbare Bauteile, insbesondere für Maschinen- und Apparateteile, vorzugsweise Schlitten oder Werkzeug- oder Werkstückhalteeinrichtungen von Bearbeitungsmaschinen, wie beispielsweise Werkzeugmaschinen, mit einer am Bauteil angreifenden Lastaufnahmeeinrichtung, welche die durch den Bauteil bedingte und zumindest zum Teil durch dessen Gewicht verursachte Belastung übernimmt, dadurch gekennzeichnet, dass die Lastaufnahmeeinrichtung wenigstens eine Aufhängeeinrichtung (17) für den Bauteil (13) aufweist, die von der Abstützung (2a, 2b, 10) für die Führung (11, 15) für den Bauteil (13) getrennt ist und die übernommene Belastung getrennt von dieser Abstützung (2a, 2b, 10) für die Führung (11, 15) ableitet.

2. Vorrichtung nach Anspruch 1, dadurch gekennzeichnet, dass sich die Aufhängeeinrichtung (17) an von den Abstützstellen (3,4,5) der Abstützung 2a,2b,10) für die Führung (11,15) gesonderten Stellen (27,28) auf dem Untergrund (7) oder einem Tragwerk, z.B. einem Fundament (6), abstützt.

3. Vorrichtung nach Anspruch 2, dadurch gekennzeichnet, dass sich die Aufhängeeinrichtung (17) auf einem Tragwerk, insbesondere einem Fundament (29,30), abstützt, das vom Tragwerk, beispielsweise dem Fundament (6), für die Abstützung (2a, 2b,10) der Führung (11,15) getrennt ist.

4.     Vorrichtung nach einem der Ansprüche 1 - 3, dadurch gekennzeichnet, dass sowohl der Bauteil (13) als auch die Aufhängeeinrichtung (17) in horizontaler Richtung (Y) verschiebbar geführt ist, wobei sich die Aufhängeeinrichtung (17) vorzugsweise über wenigstens eine Rolle (25) auf einer Laufbahn (26a) abstützt.

5.     Vorrichtung nach einem der Ansprüche 1 - 3, dadurch gekennzeichnet, dass die Aufhängeeinrichtung an einem oberhalb des Bauteils (13) angeordneten Tragwerk befestigt ist.

6.     Vorrichtung nach einem der Ansprüche 1 - 5, dadurch gekennzeichnet, dass der Bauteil (13) an zwei in einem Abstand voneinander angeordneten Stellen mit der wenigstens einen Aufhängeeinrichtung (17) verbunden ist.

7.     Vorrichtung nach Anspruch 6, dadurch gekennzeichnet, dass zwei vorzugsweise gleich ausgebildete Aufhängeeinrichtungen (17, 17') vorgesehen sind.

8.     Vorrichtung nach einem der Ansprüche 1 - 7, dadurch gekennzeichnet, dass sie zur Entlastung zumindest der Vertikalführung (15) für einen in vertikaler Richtung (Z) verschiebbaren Bauteil (13) einer Werkzeugmaschine (1) ausgebildet ist.

9.     Vorrichtung nach Anspruch 8, dadurch gekennzeichnet, dass sie bei einem auch in horizontaler Richtung (X) bewegbaren Bauteil (13) zur Entlastung der Horizontalführung (11) für den Bauteil (13) ausgebildet ist.

Fig.1

Fig. 2

Fig.3

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | DE-A-2 349 468 (INNOCENTI SANTEUSTACCHIO S.p.A.) * Seiten 5-9; Figuren 1-6 * | 1-3,5-8 | B 23 Q 11/00 |
| X | WERKSTATTSTECHNIK, Band 61, Nr. 9, 1971, Berlin N. EWERTOWSKI "Neuzeitlicher Spindelstock mit verschiebbarem Spindelschlitten für Platten-Bohr- und Fräswerke", Seiten 536-540 * Seite 538, Figur 9; Seite 539, linke Spalte, Zeilen 29-38 * | 1-3,8 | |
| X | EP-A-0 063 967 (CENTRE D'ETUDES DU FRAISAGE) * Anspruch 9; Figur 3 * | 1-3,8 | |
| A | DE-A-2 121 340 (KUJBYSCHEWSKIJ SAWOD KOORDINATNORASTOTSCHNICH STANKOW) * Seite 3; Anspruch; Figuren 1, 2 * | 4,9 | |
| D,A | GB-A-2 033 796 (SKODA O.P.) | | |

RECHERCHIERTE SACHGEBIETE (Int. Cl. ³)

B 23 B 3/10
B 23 B 39/02
B 23 B 47/26
B 23 Q 1/26
B 23 Q 11/00
B 23 Q 23/00

Der vorliegende Recherchenbericht wurde für alle Patentansprüche erstellt.

| Recherchenort BERLIN | Abschlußdatum der Recherche 05-03-1984 | Prüfer MARTIN A E W |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03.82